# EUROPÄISCHE PATENTSCHRIFT

(11) **EP 1 429 951 B1**
(45) Veröffentlichungstag und Bekanntmachung des Hinweises auf die Patenterteilung: **25.05.2005**
(21) Anmeldenummer: 02772302.2
(22) Anmeldetag: 14.09.2002
(51) Int. Cl.: B62D 3/12

(54) **ZAHNSTANGEN-LENKEINRICHTUNG**
RACK STEERING DEVICE
MECANISME DE DIRECTION A CREMAILLERE

(30) Priorität: 28.09.2001 DE 10148262
(43) Veröffentlichungstag der Anmeldung: 23.06.2004
(73) Patentinhaber: ZF Lenksysteme GmbH, 73527 Schwäbisch Gmünd (DE)
(72) Erfinder: BIEBER, Jürgen, 73529 Schwäbisch Gmünd (DE)
(86) Internationale Anmeldenummer: PCT/EP2002/010324
(87) Internationale Veröffentlichungsnummer: WO 2003/029067

(56) Entgegenhaltungen:
- EP-A- 0 812 755
- US-A- 5 788 009
- PATENT ABSTRACTS OF JAPAN vol. 1996, no. 09, 30. September 1996 (1996-09-30) & JP 08 133102 A (HONDA MOTOR CO LTD), 28. Mai 1996 (1996-05-28)

## Beschreibung

Die Erfindung betrifft eine Zahnstangen - Lenkeinrichtung nach dem Oberbegriff des Patentanspruches 1.

Allgemein bekannt ist bei Zahnstangen - Lenkeinrichtungen, daß die Lenkbegrenzung durch das Anschlagen des Radträgers (Achsschenkel) an den Lenker oder dem Verlegen der Begrenzung in das Lenkgetriebe erfolgt. Diese Lenkbegrenzungssysteme weisen störende Anschlaggeräusche auf.

Diese Anschlaggeräusche werden bei einer Zahnstangen - Lenkeinrichtung nach der DE 34 29 597 A1 vermieden, die Anschlagglieder aufweist, die an der Zahnstange befestigt sind, um die Axialbewegung der Zahnstange gegen das Gehäuse zu begrenzen. Ein Teil der Berührungsflächen ist mit elastisch nachgiebigen Teilen so ausgestattet, daß zunächst ein Auftreffen auf die elastisch nachgiebigen Teile erfolgt, um so den Auftreffstoß zu absorbieren, bevor eine Berührung zwischen den Metallen erfolgt.

Aus der gattungsgemäßen JP 08 133102 A ist ein Anschlagsystem bekannt, dessen aus elastiscem Material bestehendes Anschlagmittel vollständig in zueinander axial bewegbare, nicht elastische Teile des Anschlagsystems eingekammert ist, wobei zur Einkammerung teilweise Flächen eines Trägerbauteiles der Lenkeinrichtung verwandt werden.

Insbesondere bei elektrisch unterstützten Lenkeinrichtungen, bei welchen die drehende Ausgangsbewegung eines Elektromotors dazu benutzt wird, die manuelle Kraft, die auf die Lenkhandhabe ausgeübt wird , zu unterstützen, reichen aufgrund der Massenträgheit des Elektromotors die Dämpfungskonzepte herkömmlicher Anschlagsysteme nicht aus, um die Anschlaggeräusche zwischen den Anschlagpaaren, z. B. Spurstange und Lenkgetriebegehäuse, zu dämpfen.

Der im Patentanspruch 1 angegebenen Erfindung liegt das Problem zugrunde, eine Zahnstangen - Lenkeinrichtung der eingangs angegebenen Art zu konzipieren, bei welcher sowohl für konventionelle als auch für hitfs- bzw. fremdkraftunterstütze Lenksysteme eine zufriedenstellende Hubbegrenzung erreicht wird und dabei störende Auflaufgeräusche vermieden werden. Das Problem wird durch die im kennzeichnenden Teil des Patentanspruches 1 aufgeführten Merkmale gelöst.

Die mit der Erfindung erzielten Vorteile bestehen insbesondere darin, daß auf einfache Weise, ohne größere zusätzliche Aufwendungen an Material und Arbeitszeit eine ausreichende Begrenzung des Lenkanschlages ermöglicht wird und das Anschlagmittel selbst äußerst einfach und platzsparend ausgeführt ist. Vorteilhafte Weiterbildungen der Erfindung sind in den abhängigen Ansprüchen angegeben.

Ein Ausführungsbeispiele der Erfindung ist in der Zeichnung dargestellt und im folgenden näher erläutert. Es zeigen:

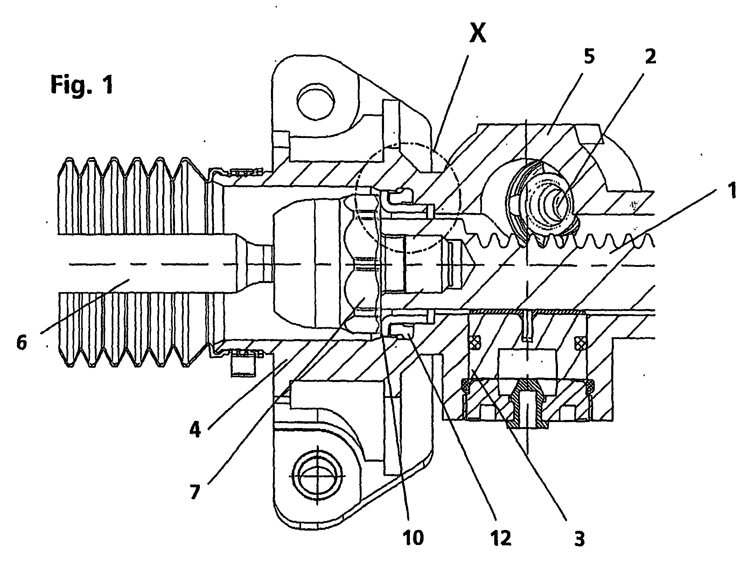

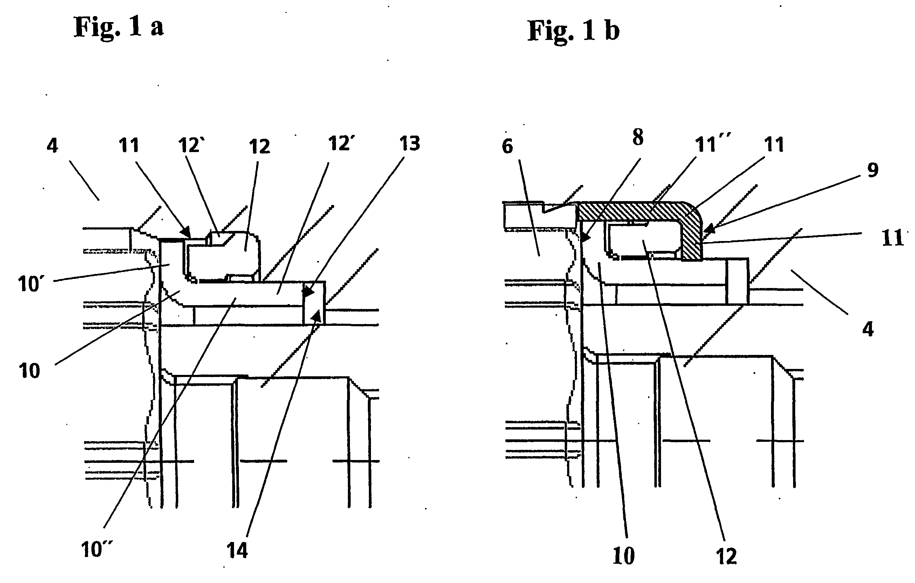

- Fig. 1: einen Schnitt durch ein Lenkgetriebe;
- Fig. 1 a: Einzelheit X;
- Fig. 1 b: eine weitere Variante der Einzelheit X.
Im wesentlichen gleiche Teile in den unterschiedlichen Figuren sind mit gleichen Bezugszeichen versehen.

In der Zeichnung ist ein Ausschnitt einer Zahnstangen - Lenkeinrichtung mit einem Anschlagpaar 8; 9 und integriertem Anschlagmittel 10; 11; 12 dargestellt. Auf der anderen Seite der Zahnstange 1 ist für den entgegengesetzten Lenkeinschlag ein äquivalentes System angeordnet Die Zahnstange 1 erstreckt sich axial beweglich in einem Lenkgetriebegehäuse 4. Ein Ritzel 2, welches durch ein Druckstück 3 im ständigen Eingriff mit den Zähnen der Zahnstange 1 gehalten wird, ist in einer als Ritzelgehäuse 5 dienenden Anformung des Lenkgetriebegehäuses 4 gelagert. Da das nicht dargestellte Lenkhandrad über eine Lenksäule (nicht dargestellt) mit dem Ritzel 2 verbunden ist, wird die manuell ausgeübte Lenkkraft auf die Zahnstange 1 übertragen, die je nach Drehrichtung des Ritzels 2 die Lenkbewegung beidseitig über die Spurstange 6 und den Lenkhebel auf die lenkbaren Räder (nicht gezeigt) überträgt. Die Spurstangen 6 sind jeweils über Axialgelenke 7 mit der Zahnstange 1 verbunden. Axialgelenk- und Gehäuseflächen 8 und 9 bilden an beiden Zahnstangenenden ein Anschlagpaar 8; 9. Zwischen den Anschlagflächen 8 und 9 jedes Anschlagpaares 8; 9 sind Anschlagmittel 10; 11; 12 integriert. Ein Anschlagmittel 10; 11; 12 wird aus zwei Flanschen 10; 11 (Fig. 1 b) von unterschiedlichen Durchmessern gebildet, die im Abstand zueinander derart angeordnet sind, daß ihre kurzen Stege 10' und 11' jeweils an der einander zugekehrten Seite der sich gegenüberliegenden langen Stege 10" oder 11 " des jeweils anderen Flansches 10 oder 11 anliegen, so daß die Flansche 10; 11 eine annähernd hohlzylinderförmige Kammer bilden, welche ein elastisch nachgiebiges Material 12 vollständig umschließt. Während der äußere Flansch 11 im Gehäuse 4 fest installiert ist, kann der innere Flansch 10 beschränkt axial bewegt werden. Vorteilhaft werden in einem anderen Ausführungsbeispiel die Kammerflächen des äußeren Flansches 11 durch eine winkelförmige Ausnehmung 11 im Gehäuse (Fig. 1 a) gebildet, so daß das Anschlagmittel 10; 11; 12 in sich noch platzsparender ausgeführt werden kann.

Der Flansch 10, der axial beweglich zu dem Gehäuse 4 angeordnet ist, hält mit seiner von dem Axialgelenk 7 abgewandten kreisringförmigen Endfläche 13 im entlasteten Zustand einen Abstand zur axial ausgerichteten Fläche 14 des Gehäuses 4. Durch die auf Abstand angeordneten Flächen 13; 14, die als mechanischer Endanschlag 13 und 14 wirken, wird das eingekammerte elastisch nachgiebige Material 12 vor Überbeanspruchung durch Mißbrauch geschützt.

Dieses elastisch nachgiebige Material 12 weist Hinterschneidungen 12' auf, durch welche die Kraftwirkung, der durch einen Lenkeinschlag eingeleiteten Kraft in dieses Material 12 gezielt beeinflußt und dessen Verformung in vorbestimmte Richtungen gelenkt wird (keine Spaltextrusion).

Beispielhaft ist das elastisch nachgiebige Material 12 durch eine elastische Schnappverbindung formschlüssig mit dem äußeren Flansch 11 oder direkt mit dem Gehäuse 4 verbunden. Ein Fixieren des Materials 12 kann auch durch ein zusätzliches Element, z. B. einem Sicherungsring, bzw. durch Verstemmen, Vulkanisieren oder Verkleben erfolgen. Durch eine feste Verbindung mit dem Gehäuse 4 bzw. dem Flansch 11 gibt es aufgrund von Relativbewegungen Scherspannungen, die zusätzlich zur Dämpfung beitragen. Weiterhin wird das Auftreten von Spaltextrusionen bei dem elastischen Material 12 vermieden. Ebenso kann der Flansch 10 mit den gleichen Verbindungselementen oder -verfahren mit dem elastisch nachgiebigen Material 12 verbunden werden. Beispielhaft ist der Flansch 10 mit dem Material 12 durch Kleben verbunden. Ein ein- bzw. mehrteiliges Einbringen des elastischen Materials 12 in die sie umgebende Kammer ohne eine form- bzw. kraftschlüssige Verbindung ist jedoch auch möglich.

Als Trägerbauteil 4 oder 7 für das elastische Anschlagmittel 10; 11; 12 wird im dargestellten Ausführungsbeispiel das Lenkgetriebegehäuse 4 verwandt, so daß an dem Axialgelenk 7 der Spurstangen - Zahnstangenverbindung, die mit dem Anschlagmittel 10; 11; 12 korrespondierende Fläche 8 herausgearbeitet ist. Jedoch ist es möglich das elastische Anschlagmittel 10; 11; 12 an dem Axialgelenk 7 oder die Zahnstange 1 selbst und die entgegengesetzt ausgerichtete Endfläche 9 am Gehäuse 4 zu integrieren.

Über die Darstellung eines konventionellen Lenksystemes hinaus, kann das elastische Anschlagmittel 10; 11; 12 jederzeit bei hilfskraftunterstützten Lenksystemen, wie hydraulischen, pneumatischen, elektrohydraulischen und elektrischen oder fremdkraftunterstützten Lenksystemen, wie einer mit einem Lenkgetriebe arbeitenden Steer-by-wire Lenkung eingesetzt werden, d. h. auch die Eingangs beschriebenen Auflaufgeräusche durch die Massenträgheit eines zur Lenkunterstützung eingesetzten Elektromotors werden beseitigt.

## Patentansprüche

1. Zahnstangen - Lenkeinrichtung mit einer in einem Gehäuse (4) angeordneten Zahnstange (1), die beidseitig über Spurstangen (6) und Lenkhebel mit den lenkbaren Rädern verbunden ist und einem ständig in die Zahnstange (1) eingreifenden Ritzel (2), weiches mit dem Lenkhandrad über eine Lenksäule in Verbindung steht und beidseitig zwischen Gehäuse (4) und axial bewegbaren Teilen der Zahnstangen - Lenkeinrichtung integrierten Anschlagmitteln (10; 11; 12), welche die Axialbewegung der Zahnstange (1) in beide Lenkrichtungen begrenzen, wobei die Anschlagmittel (10; 11; 12) aus elastisch nachgiebigen Material (12) bestehen, welches vollständig in zueinander axial bewegbaren, nicht elastischen Teilen (10; 11), der Anschlagmittels (10; 11; 12) eingekammert ist und zur Einkammerung des elastisch nachgiebigen Materials (12) teilweise Flächen eines Trägerbauteils (4 oder 7) der Lenkeinrichtung verwandt werden,
**dadurch gekennzeichnet, daß** das elastisch nachgiebige Material (12) jeweils einerseits in einer Ausnehmung (11) des Trägerbauteils (4 oder 7) des Lenkgetriebes eingebettet ist und andererseits von einem axial begrenzt beweglichen Flansch (10) umschlossen wird.

2. Zahnstangen - Lenkeinrichtung nach Anspruch 1, **dadurch gekennzeichnet, daß** Anschlagmittel (10; 11; 12) beidseitig am/im Gehäuse (4) integriert sind und mit der Endfläche (8) des Axiaigelenkes (7) der Spurstange (1) korrespondieren.

3. Zahnstangen - Lenkeinrichtung nach Anspruch 1, **dadurch gekennzeichnet, daß** Anschlagmittel (10; 11; 12) spurstangenseitig angeordnet sind und an entgegengesetzt ausgerichtete Endflächen (9) des Gehäuses (4) anschlagen.

4. Zahnstangen - Lenkeinrichtung nach einem der Ansprüche 1bis 4 3,
**dadurch gekennzeichnet, daß** der Flansch (10) mit seiner von der Anschlagfläche (8 oder 9) abgewandten Fläche (13) im entlasteten Zustand des Anschlagmittels (10; 11; 12) einen Abstand zu der mit ihr korrespondierenden Fläche (14) des Trägerbauteils (4 oder 7) einhält.

5. Zahnstangen - Lenkeinrichtung nach einem der Ansprüche 1bis 5 4,
**dadurch gekennzeichnet, daß** das elastisch nachgiebige Material (12) Hinterschneidungen (12') aufweist.

6. Zahnstangen - lenkeinrichtung nach einem der Ansprüche 1 bis 5,
**dadurch gekennzeichnet, daß** das Anschlagmlttel (10; 11; 12) durch zusätzliche Elemente und/oder Verfahren zum Trägerbauteil (4 oder 7) oder Flansch (11) hin adaptiert ist

7. Zahnstangen - Lenkeinrichtung nach einem der Ansprüche 1 bis 6,
**dadurch gekennzeichnet, daß** der Flansch (10) mit dem elastisch nachgiebigen Material (12) kraft- oder formschlüssig verbunden ist.

## Claims

1. Rack-and-pinion steering device, with a rack (1) which is arranged in a housing (4) and which is connected on both sides to the steerable wheels via track rods (6) and steering levers, and with a pinion (2) which constantly engages into the rack (1) and which is connected to the steering handwheel via a steering column, and with stop means (10; 11; 12) which are integrated on both sides between the housing (4) and axially movable parts of the rack-and-pinion steering device and which limit the axial movement of the rack (1) in both steering directions, the stop means (10; 11; 12) consisting of elastically flexible material (12) which is housed completely in inelastic parts (10; 11), movable axially with respect to one another, of the stop means (10; 11; 12), and partially surfaces of a carrier component (4 or 7) of the steering device being used for housing the elastically flexible material (12), **characterized in that** the elastically flexible material (12) in each case, on the one hand, is embedded in a recess (11) of the carrier component (4 or 7) of the steering gear and, on the other hand, is surrounded by a flange (10) movable axially to a limited extent.

2. Rack-and-pinion steering device according to Claim 1, **characterized in that** stop means (10; 11; 12) are integrated on both sides on/in the housing (4) and match with the end face (8) of the axial joint (7) of the track rod (1).

3. Rack-and-pinion steering device according to Claim 1, **characterized in that** stop means (10; 11; 12) are arranged on the track-rod side and butt against oppositely oriented end faces (9) of the housing (4).

4. Rack-and-pinion steering device according to one of Claims 1 to 3, **characterized in that**, in the relieved state of the stop means (10; 11; 12), the flange (10) maintains, with its surface (13) facing away from the stop surface (8 or 9), a clearance with respect to that surface (14) of the carrier component (4 or 7) which matches with the surface (13).

5. Rack-and-pinion steering device according to one of Claims 1 to 4, **characterized in that** the elastically flexible material (12) has undercuts (12').

6. Rack-and-pinion steering device according to one of Claims 1 to 5, **characterized in that** the stop means (10; 11; 12) is adapted by means of additional elements and/or movement towards the carrier component (4 or 7) or flange (11).

7. Rack-and-pinion steering device according to one of Claims 1 to 6, **characterized in that** the flange (10) is connected to the elastically flexible material (12) non-positively or positively.

## Revendications

1. Mécanisme de direction à crémaillère présentant une crémaillère (1) disposée dans un logement (4), laquelle est raccordée des deux côtés par l'intermédiaire de barres d'accouplement (6) et de leviers de commande de roue aux roues dirigeables, et un pignon (2) s'engrènant de façon permanente dans la crémaillère (1), lequel se trouve en liaison avec le volant manuel de direction par l'intermédiaire d'une colonne de direction, et des moyens de butée (10 ; 11 ; 12) intégrés des deux côtés entre le logement (4) et des pièces axialement mobiles du mécanisme de direction à crémaillère qui limitent le mouvement axial de la crémaillère (1) dans les deux directions de braquage, les moyens de butée (10 ; 11 ; 12) étant constitués d'une matière élastiquement flexible (12) qui est entièrement logée dans des pièces non élastiques (10 ; 11) des moyens de butée (10 ; 11 ; 12), axialement mobiles les unes par rapport aux autres, et des surfaces d'un composant porteur (4 ou 7) du mécanisme de direction étant utilisées partiellement pour loger la matière élastiquement flexible (12), **caractérisé en ce que** la matière élastiquement flexible (12) est à chaque fois d'une part intégrée dans un évidement (11) du composant porteur (4 ou 7) du renvoi de direction et d'autre part entourée par une bride mobile (10) limitée axialement.

2. Mécanisme de direction à crémaillère selon la revendication 1, **caractérise en ce que** les moyens de butée (10 ; 11 ; 12) sont intégrés des deux côtés contre/dans le logement (4) et correspondent à la surface terminale (8) de l'articulation axiale (7) de la barre d'accouplement (6).

3. Mécanisme de direction à crémaillère selon la revendication 1, **caractérisé en ce que** les moyens de butée (10 ; 11 ; 12) sont disposés du côté de la barre d'accouplement et butent contre des surfaces terminales (9) du logement (4) orientées de façon opposée.

4. Mécanisme de direction à crémaillère selon l'une quelconque des revendications 1 à 3, **caractérisé en ce que** la bride (10) avec sa surface (13) ne faisant pas face aux surfaces de butée (8 ou 9) tient une distance par rapport à la surface (14) du composant porteur (4 ou 7) lui correspondant, en cas d'état non sollicité du moyen de butée (10 ; 11 ; 12).

5. Mécanisme de direction à crémaillère selon l'une des revendications 1 à 4, **caractérisé en ce que** la matière élastiquement flexible (12) présente des découpes arrière (12').

6. Mécanisme de direction à crémaillère selon l'une quelconque des revendications 1 à 5, **caractérisé en ce que** le moyen de butée (10 ; 11 ; 12) est adapté par des moyens et/ou procédés supplémentaires au composant porteur (4 ou 7) ou à la bride (11).

7. Mécanisme de direction à crémaillère selon l'une quelconque des revendications 1 à 6, **caractérisé en ce que** la bride (10) est raccordée par la force ou par la forme à la matière élastiquement flexible (12).
